# EUROPÄISCHE PATENTSCHRIFT

(11) **EP 0 434 967 B1**
(45) Veröffentlichungstag und Bekanntmachung des Hinweises auf die Patenterteilung: **27.07.1994**
(21) Anmeldenummer: 90122122.6
(22) Anmeldetag: 20.11.1990
(51) Int. Cl.: B60C 11/11

(54) **Laufflächenprofil für Fahrzeugreifen**
Tread pattern for vehicle tires
Profil de bande de roulement pour pneumatiques

(30) Priorität: 29.12.1989 DE 3943358; 29.12.1989 DE 3943359
(43) Veröffentlichungstag der Anmeldung: 03.07.1991
(73) Patentinhaber: Continental Aktiengesellschaft, 30165 Hannover (DE)
(72) Erfinder: Wissbrock, Horst, Dr, W-3008 Garbsen 8 (DE); Huinink, Heinrich, Dipl.-Ing., W-3008 Garbsen 1 (DE); Decker, Heinrich, W-3008 Garbsen 4 (DE); Gaus, Helmut, Dipl.-Ing., W-3057 Neustadt 1 (DE); Pfaff, Daniel, W-3006 Burgwedel 6 (DE); Knauf, Werner, Dipl-Ing., W-3050 Wunstorf 1 (DE)
(74) Vertreter: Schneider, Egon

(56) Entgegenhaltungen:
- EP-A- 0 259 243
- EP-A- 0 347 575
- GB-A- 2 005 200
- GUMMIBEREIFUNG Bd. 61, Nr. 4, April 1985, Bielefeld,Seite 54; "Professional, der "Sportlich-Progressive""

## Beschreibung

Die Erfindung bezieht sich auf ein Laufflächenprofil für Fahrzeugreifen gemäß dem Oberbegriff des Anspruches 1.

Als Stand der Technik werden die "Neue Reifenzeitung 1/89", Seiten 42 bis 59, und die "Gummibereifung 10/88" Seite 52, oben rechts genannt. Die genannten Reifenprofile sind "symmmetrisch" und nicht laufrichtungsgebunden; die Beibehaltung dieser Randbedingungen ist für die neue Lösung von Kfz-Herstellern vorgegeben. In diesem Zusammenhang sagt der Begriff "symmetrisch" in der Reifenfachsprache nichts aus über die Symmetrie im geometrischen Sinne. Vielmehr ist gemeint, daß der Reifen unabhängig von der Montage linksrum oder rechtsrum die gleichen Laufeigenschaften zeigt.

Als weiterer Stand der Technik wird aus der italienischen Zeitschrift "PNEURAMA" 4/1988, Seite 41, die untere Abbildung, linker oder mittlerer Reifen genannt. Bei diesen Reifen gehen die Positive der auf den Reifenschultern angeordneten Profilelemente ohne jede Trennung in die Positive der äußeren Klotzreihe über. Schließlich wird die Abbildung aus der "Gummibereifung" 2/79, Seite 71, unten rechts erwähnt. Der dort gezeigte Diagonalreifen für geländegängige Motorräder liegt jedoch weit ab.

Aufgabe der Erfindung ist es, ein neues Reifenprofil anzugeben, das noch besser die konkurrierenden Eigenschaften Lebensdauer, Naßrutschfestigkeit, Aquaplaning und Geräusch-Komfort miteinander zu vereinen vermag. Dieses Profil soll für besonders wirtschaftliche Sommerreifen, insbesondere mit Radialkarkasse, bis etwa 190 km/h eingesetzt werden.

Die Aufgabe wird erfindungsgemäß durch die Merkmale des Anspruchs 1 gelöst. Dabei versteht es sich, daß die mittleren Klotzreihen eine gerade Profilschritt-Anzahl haben müssen.

Bei der nachfolgenden Beschreibung der S- und T-Klötze werden mit dem Begriff "Seitenkanten" die Klotzkanten, die im wesentlichen in der Umfangsrichtung verlaufen, und mit dem Begriff "Stirnkanten" die Klotzkanten, die eine wesentliche Komponente quer zur Umfangsrichtung aufweisen, angesprochen.

Unter S-Klötzen werden im Rahmen dieser Anmeldung solche Klötze verstanden, die zwei gegenüberliegende, S-förmig geschwungene Seitenkanten aufweisen, die im wesentlichen zueinander parallel verlaufen. Die beiden anderen Kanten, die Stirnkanten, verlaufen ebenfalls im wesentlichen parallel zueinander und sind gegenüber der Axialen um einen Winkel zwischen 15° und 50° geneigt. Die in den mittleren Klotzreihen mit den S-Klötzen sich abwechselnden T-Klötze unterscheiden sich von den S-Klötzen dadurch, daß die S-förmig geschwungenen, gegenüberliegenden Seitenkanten der Klötze nicht zueinander parallel verlaufen, sondern im wesentlichen spiegelverkehrt. Hierdurch ergibt sich das wichtige Charakteristikum, daß eine der beiden Stirnkanten, die um einen Winkel zwischen 15° und 50° gegenüber der Axialen geneigt sind, wesentlich länger ist als die andere. Der Längenunterschied sollte 25 bis 45 % der kürzeren der beiden Stirnkantenlängen betragen. Diese beiden Stirnkanten verlaufen im wesentlichen zueinander parallel.

Die T-Klötze sind als solche bezeichnet, weil ihr Grundriß dem eines fettgedruckten, großen Buchstabens "T" entspricht. Der im normalen Schriftbild waagerecht verlaufende Strich wird im Rahmen dieser Anmeldung als Querbalken bezeichnet, während der im normalen Schriftbild senkrecht stehende Strich als Stützbalken bezeichnet wird. Bei den erfindungsgemäßen T-Klötzen verläuft der Stützbalken im wesentlichen in der Umfangsrichtung, während der Querbalken gegenüber der Axialen um einen Winkel zwischen 15° und 50° geneigt ist. Der Einsatz der wie beschrieben gestalteten T-Klötze hat sich als entscheidend erwiesen für die Vermeidung ausgeprägter Spitzen im Anregungsspektrum des Laufflächenprofiles bei Abroll-Geräuschmessungen.

Nach einer bevorzugten Weiterbildung der Erfindung liegt der geneigte Querbalken eines jeden T-Klotzes einer der mittleren Klotzreihen in der Laufrichtung gesehen vor dem in Umfangsrichtung ausgerichteten Stützbalken desselben T-Klotzes während der geneigte Querbalken eines jeden T-Klotzes einer anderen der mittleren Klotzreihen in der Laufrichtung gesehen hinter dem in Umfangsrichtung ausgerichteten Stützbalken desselben T-Klotzes liegt. Das heißt, daß vorzugsweise die T-Klötze der beiden benachbarten mittleren Klotzreihen umgekehrt herum orientiert sind; während in der einen Klotzreihe die "T" alle aufrecht stehend zu erkennen sind, sind sie in der benachbarten, anderen mittleren Klotzreihe alle auf dem Kopf stehend zu erkennen.

Die konstruktive Idee der vorgenannten Weiterbildung wird dadurch weiter vervollkommnet, daß die entgegengesetzt ausgerichteten T-Klötze der mittleren Klotzreihen im wesentlichen axial nebeneinander liegen und Blockpaare dergestalt bilden, daß die paarbildenden T-Klötze durch eine Nut getrennt sind nach Art der kennzeichnenden Merkmale des Anspruches 3. Durch diese Gestaltung sind die T-Klötze entlang der sie voneinander trennenden Profilrille ineinander verschachtelt. Dabei reicht der Querbalken der T-Klötze der rechten der beiden mittleren Klotzreihen etwa so weit nach links, wie die Querbalken der linken T-Klotzreihe nach rechts reichen. Der Kröpfungsversatz der die beiden T-Klötze voneinander trennenden Umfangnut entspricht 50 % bis 110 % der Breite dieser Nut. Die Verschachtelung der T-Klötze ineinander ermöglicht eine besonders gleichmäßige Krafteinleitung vom Reifen in die Straße trotz unterschiedlicher Längen der Stirnkanten dieser Klötze. Insbesondere wird auch eine gute Gleichmäßigkeit der Seitenkraftübertragung erzielt.

Analog den ineinander greifenden T-Klötzen werden vorzugsweise auch die S-Klötze der mittleren Klotzreihen so angeordnet, daß sie im wesentlichen axial nebeneinander liegen und Blockpaare dergestalt bilden, daß die paarbildenden S-Klötze durch eine Nut getrennt sind nach Art der kennzeichnenden Merkmale des Anspruches 4. Dabei ist vorzugsweise die Kröpfung im mittleren Nutabschnitt umgekehrt orientiert wie zwischen den T-Klötzen. Die aus Steifigkeitsgründen besonders wichtige Ineinanderschachtelung der T-Klötze ermöglicht in Verbindung mit der beschriebenen Ineinanderschachtelung der S-Klötze eine über dem Umfang besonders gleichmäßige Drainagewirkung und damit günstiges Aquaplaningverhalten.

Die bevorzugte Verbindung der kennzeichnenden Merkmale der Ansprüche 3, 4 und 5 führt zu dem Charakteristikum, daß sich zwischen den beiden mittleren Profilklotzreihen eine gewellte Längsrille befindet, deren Wellenlänge über zwei Profilschritte des Laufflächenprofiles reicht. Zwar ist es im Stand der Technik vorbekannt, das Anregungsspektrum eines Reifens dadurch zu vergleichmäßigen, daß die Periodenlänge einiger Schallereignisse gegenüber der Profilschrittlänge verlängert wird, jedoch ist hier das Besondere, daß dieses Gestaltungsmittel an einer einzigen Umfangsrille und zwar allein an der mittleren Profilrille verwirklicht wird. Hier ist die neue, für die zuständigen Reifenfachleute überraschende Erkenntnis eingeflossen, daß die beste Spektrumsstreuung nicht - wie bislang angenommen - durch eine etwa gleichmäßige Verteilung von Profilrillen mit einfacher und doppelter Wellenlänge erreicht wird, sondern vielmehr mit einer Verwendung langwelliger Profilrillen in krasser Minderheit. Die Techniker erklären sich diese überraschende Erkenntnis damit, daß das subjektive Hörempfinden die von den kurzwelligen Profilrillen ausgehenden Schallereignisse bei Existenz um einen ganzzahligen Faktor längeren Wellenlängen anderer Profilrillen weniger als eigenständige Töne sondern vielmehr als Obertöne zu den von den langwelligen Profilrillen ausgehenden Frequenzen auffaßt und dadurch die subjektiv empfundene Stärke dieser tiefen Töne erhöht. Es hat sich als besonders vorteilhaft herausgestellt, wenn nur eine einzige Umfangsrille als langwelliger Mäander ausgeführt ist. Bei asymmetrischen Profilgestaltungen wird zweckmäßigerweise diese eine langwellige Profilrille außermittig liegen; bei der hier vorliegenden Aufgabe, einen symmetrischen Reifen anzugeben, muß die singuläre langwellige Rille zwangsläufig die Mittelrille sein.

Ein erfindungsgemäßes Laufflächenprofil umfaßt zweckmäßigerweise sechs Profilklotzreihen, die bei normaler Geradeausfahrt die Aufstandsfläche durchlaufen und weist an beiden axialen Rändern je eine weitere Schulterklotzreihe auf, die bei normaler Geradeausfahrt die Straßenoberfläche nicht berühren. Dabei sollten die Klötze der äußeren, die Aufstandsfläche durchlaufenden Klotzreihen zweckmäßigerweise geringfügig bis in die Reifenschultern hereinragen.

Nach einer anderen Weiterbildung der Erfindung ist ein Laufflächenprofil gemäß Anspruch 1, welches auf beiden Seiten mit je einer äußeren Profilklotzreihe, die sich nicht oder zumindest nicht wesentlich bis in die Reifenschulter erstrecken, und nach axial innen anschließend mit je einer weiteren Profilklotzreihe ausgestattet ist, dadurch gekennzeichnet, daß die Klötze dieser benachbarten Klotzreihen durch Nuten voneinander getrennt sind, die 30 % bis 55 % der Tiefe der übrigen Nuten aufweisen. Diese Nuten tragen nämlich aufgrund des ohnehin ausgezeichneten Aquaplaning-Verhaltens weniger zur Drainage als vielmehr zur Flexibilität der abrollenden Lauffläche bei. Durch die Beschränkung auf die halbe Profiltiefe wird eine zu große Flexibilität vermieden, die zu unnötig hohen Walkverlusten führen würde und damit den Rollwiderstand und die Lauftemperatur erhöhen würde. Gegenüber einem völligen Verzicht auf diese Nuten ergibt sich der Vorteil des verringerten Abrollgeräusches. Zwischen den einander widerstrebenden Anforderungen an ein Laufflächenprofil ist die Beschränkung auf die halbe Profilrillentiefe an dieser Stelle ein besonders glücklicher Kompromiß.

Mit der bevorzugten Ausgestaltung der Erfindung nach Anspruch 11 wird die axiale Wasserabführung optimiert.

Eine vorteilhafte Weiterbildung der Erfindung ist durch Kombination der Merkmale des Anspruches 1 mit den an sich bekannten kennzeichnenden Merkmalen des Anspruches 12 beschrieben.

Als "Negative" werden im Rahmen dieser Anmeldung solche Profilbereiche bezeichnet, die im Neuzustand gegenüber den Profilbereichen an der äußersten Peripherie, den "Positiven", versenkt sind; demnach ist beispielsweise jede Profilrille ein Negativ. Unter Negativanteil wird das Verhältnis der versenkten Flächen zur betrachteten Summe von Negativ-und Positivflächen verstanden. - Im Anspruch 12 ist nicht der über die gesamte Oberfläche des Reifens gemittelte Negativanteil gemeint, sondern allein der der Reifenschultern.

Die Verwendung von Profilelementen auf beiden Schultern von Radialreifen, insbesondere für PKW, ist üblich. Neben gestalterischen Gesichtspunkten ist hierfür ausschlaggebend, daß diese Profilelemente trotz der relativ kleinen Raddurchmesser eine hohe Kantensteigfähigkeit ohne Verletzungsgefahr für die Karkasse und die Ränder (=Kanten) der Gürtellagen ermöglichen. Kantensteigfähigkeit wird beispielsweise dazu benötigt, um auch im spitzen Winkel Bordsteinkanten zu erklimmen, was insbesondere beim Ein- und Ausparken von Bedeutung ist. Schulterprofilelementreihen haben die Aufgabe, beim Heranfahren an zu überwindende Kanten Anscheuerungen der verletzlichen Karkasse und der Gürtelkanten zu vermeiden; nach Verletzungen der Karkasse oder einer der Gürtellagen darf ein Reifen aus Sicherheitsgründen nicht weiter verwendet werden.

Die Weichheit und Hysterese der Gummimischung für die Reifenschultern und deren Profilelemente führen zu erheblicher Walkleistung in den Schulterprofilelementen. Bei Radialreifen greift die Erhitzung durch die Walkleistung die axialen Ränder der Gürtellagen an. Um an dieser empfindlichen Stelle eine ausreichende Dauerfestigkeit zu erreichen, ist die Höchstgeschwindigkeit, für die der Reifen zugelassen ist, zu begrenzen. Die Profilelemente der Reifenschulter senken also die Hochgeschwindigkeitsfestigkeit. Für den Alltagsbetrieb sind sie aber als Hilfsmittel zur Kantenübersteigung unverzichtbar. Die vorbekannte, auf die Minimierung der Walkleistung in der Nähe der Gürtelkanten ausgelegte Profilierung der Reifenschultern,führt zu einer unerwünschten Erhöhung der Abrollgeräusche. Dies betrifft auch niederfrequente Anteile, die im Fahrzeuginneren wahrnehmbar sind.

Um einen alltagstauglichen Reifen anzugeben mit erhöhter Hochgeschwindigkeitsfestigkeit und niedrigerem Abrollgeräusch, wird als Weiterbildung gemäß Anspruch 13 vorgeschlagen, daß jedes Schulterprofilelement eine von erhabenen Rand umschlossene Senke aufweist und, daß die Profilelemente von den Klötzen der äußeren Klotzreihen durch je eine Umfangsnut entkoppelt sind, die im wesentlichen so tief sind, wie die Tiefe der Senke gegenüber den erhabenen Rändern.

Das Wort "Rand" ist in dem Begriff "erhabener Rand" nicht im abstrakten, geometrischen Sinne als Begrenzungslinie, die selbst weder Flächeninhalt noch Volumen hätte, aufzufassen, sondern als ein körperliches Gebilde. Statt von einem "erhabenen Rand" könnte man bildhaft auch von einem "Wall" sprechen.

Durch die Senke in den Schulterklötzen wird die Gesamtmasse des in der Reifenschulter befindlichen Gummis reduziert. Neben einer Materialkostenersparnis bringt dies insbesondere eine Temperaturabsenkung an den für das Alterungsverhalten des Reifens besonders empfindlichen Gürtelkanten; bei vergrößerter kühlender Oberfläche ist nämlich die anfallende Walkleistung verringert.

Durch den erhabenen Rand schützen diese Profilelemente verringerter Masse dennoch die Reifenschulter vor Anscheuerungen der Karkasse und der Gürtelenden beim Heranfahren an Bordsteinkanten. Das verringerte, für den Abrieb zur Verfügung stehende Gummivolumen wird kompensiert durch die verbesserte Kletterfähigkeit dieses Schulterdesigns. Wegen der verbesserten Langlebigkeit von Fahrzeugreifen mit diesem Merkmal und verringerten Materialkostenaufwandes trägt dieses Merkmal zur Wirtschaftlichkeit bei.

Von besonderer Bedeutung ist die erreichte Geräuschsenkung, die die Erfinder darauf zurückführen, daß einerseits die übergangsstelle zwischen der Seitenwand und der Lauffläche selbst weniger Schwingungen anregt infolge der besonders biegeweichen, scharnierartigen Verbindung zwischen beiden Bauteilen und andererseits die im wesentlichen in Umfangsrichtung verlaufende Entkopplungsrille gleichzeitig die Impedanz der Körperschallleitung von der Lauffläche in die Seitenwand und weiter über die Felge und Radaufhängung bis in die Karosserie erhöht.

Die gemäß Anspruch 13 ausgebildeten Profilelemente stellen überdies einen gerade für den typischen Stadtverkehrsbetrieb von PKW wichtigen Abnutzungsindikator dar. Wenn der erhabene Rand der Schulterelemente eingeebnet ist, ist der Reifen aus Sicherheitsgründen auszutauschen. Die bislang bekannten Verschleißindikatoren haben nur den Abrieb in den Laufflächenbereichen erfaßt, die unter Normalbedingungen (normaler Luftdruck, Geradeausfahrt, normale Radlast, etc.) mit der Fahrbahn in Kontakt treten.

Vorzugsweise weisen die Senken in den Schulterprofilelementen gemäß Anspruch 14 eine Tiefe zwischen 0,7 und 2 mm auf. In diesem Maßintervall stehen der Anscheuerungsschutz der Gürtelkanten und die Walkleistung in einem besonders günstigen Verhältnis zueinander. Die Tiefe der Entkoppelungsnut beträgt vorzugsweise 100 % bis 150 % der Tiefe der Senken in den Schulterprofilelementen.

Nach einer Weiterbildung der Erfindung ist die - vorzugsweise eben ausgebildete - Senke gegenüber der Reifenperipherie so geneigt, daß sich am zur Lauffläche weisenden Ende eine um etwa 20 % größere Senkentiefe ergibt als am zum Wulst weisenden Ende der Senke. Die Tiefe der Entkopplungsrillen sollte in diesem Fall mindestens so groß sein wie die durchschnittliche Senkentiefe.

Zweckmäßigerweise werden die Profilelemente der Reifenschultern in der Weise ausgebildet, daß der erhabene Rand jedes Profilelementes ein in sich geschlossener - vorzugsweise unrunder - Ring ist, der von allen anderen erhabenen Teilen der Reifenoberfläche durch Negative wie Längs- oder Querrillen getrennt ist. Durch die ringförmige Ausbildung sind die Profilelemente, die bezüglich ihrer Höhe auch als Miniklötze angesprochen werden können, gegenüber Belastungen tangential zur Reifenoberfläche fast so steif wie massive Kötze ohne die durch die Weiterbildung angestrebte Flexibilität senkrecht dazu zu beeinträchtigen. Der Verzicht auf jegliche Verbindung der Profilelemente der Schulter untereinander ergibt eine besonders gute Kantensteigfähigkeit.

Vorzugsweise wird vorgenannte Ausbildung dadurch optimiert, daß die Profilelemente im wesentlichen von quadratischer Gestalt sind, wobei zwei Elementkanten annähernd quer zur Umfangsrichtung angeordnet sind, während die beiden anderen im wesentlichen in die Umfangsrichtung weisen und etwa auf ihrer halben Länge eine Kröpfung zeigen, die einen Kantenversatz von 25 % bis 65 % der Breite der erhabenen Ränder beträgt. Mit dem Ausdruck "annähernd quer zur Umfangsrichtung" ist insbesondere ein Winkel zwischen 75° bis 87° gemeint. Der geringfügige Versatz der in Umfangsrichtung weisenden Kanten vergleichmäßigt die Kautschukströmungsverhältnisse in der Vulkanisierform. Die im wesentlichen rechtwinklige Ausrichtung nach Radial- und Umfangsrichtung ergibt eine günstige Selbstreinigung der Negative in der Schulter durch Fliehkräfte.

Vorzugsweise ist jede Senke in ihrem Grunde im wesentlichen eben und die Begrenzungskanten jeder Senke in der Draufsicht verlaufen parallel zu den inneren Begrenzungskanten des zugehörigen erhabenen Randes. Es ist bekannt, daß die Flanken (Böschungen) von Negativen zur Vermeidung großer Kerbwirkungen vorteilhafterweise nicht scharfkantig sondern verrundet an den Grund der Senke anschließen. Für Fälle, wo diese Verrundungen besonders groß auszubilden sind oder, wo der Senkengrund nicht eben ist, empfiehlt sich die Abwandlung obiger Ausführung, daß die Tiefenlinien der Senke im wesentlichen parallel zu den inneren Begrenzungskanten des erhabenen Randes verlaufen sollen. Die Parallelität der Kanten bzw. Tiefenlinien ergibt einen besonders günstigen Kompromiß zwischen möglichst großer Reduktion des walkenden Gummivolumens einerseits und einer möglichst großen Widerstandsfähigkeit der Schulterprofilelemente gegen Anscheuerungen andererseits.

Die Erfindung wird nachfolgend anhand eines Ausführungsbeispieles, das in vier Figuren dargestellt ist, näher erläutert.

Es zeigt:
- Fig. 1: einen erfindungsgemäßen Fahrzeugluftreifen in perspektivischer Ansicht,
- Fig. 2: den gleichen Fahrzeugluftreifen in der Draufsicht,
- Fig. 3: die Draufsicht auf eine Abwicklung des Laufflächenprofiles des erfindungsgemäßen Fahrzeugluftreifens und
- Fig. 4: den Querschnitt durch den Kronenbereich eines Fahrzeugluftreifens mit erfindungsgemäßem Laufflächenprofil.

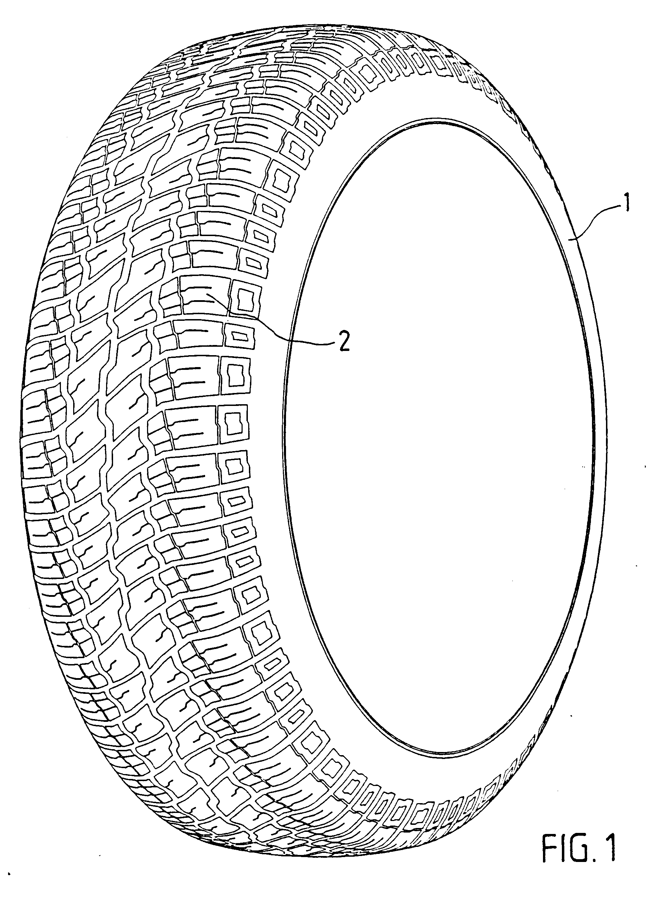

Der in Figur 1 gezeigte erfindungsgemäße Fahrzeugluftreifen 1 weist ein Laufflächenprofil 2 auf.

Viele Fachleute zählen zu dem Begriff "Laufflächenprofil" auch die - sofern vorhanden - Schulterklotzreihen hinzu, also Klotzreihen, die unter Normalbedingungen nicht mit der Straßenoberfläche in Kontakt treten. Im Rahmen dieser Anmeldung wird der Begriff "Laufflächenprofil" in diesem Sinne verwendet.

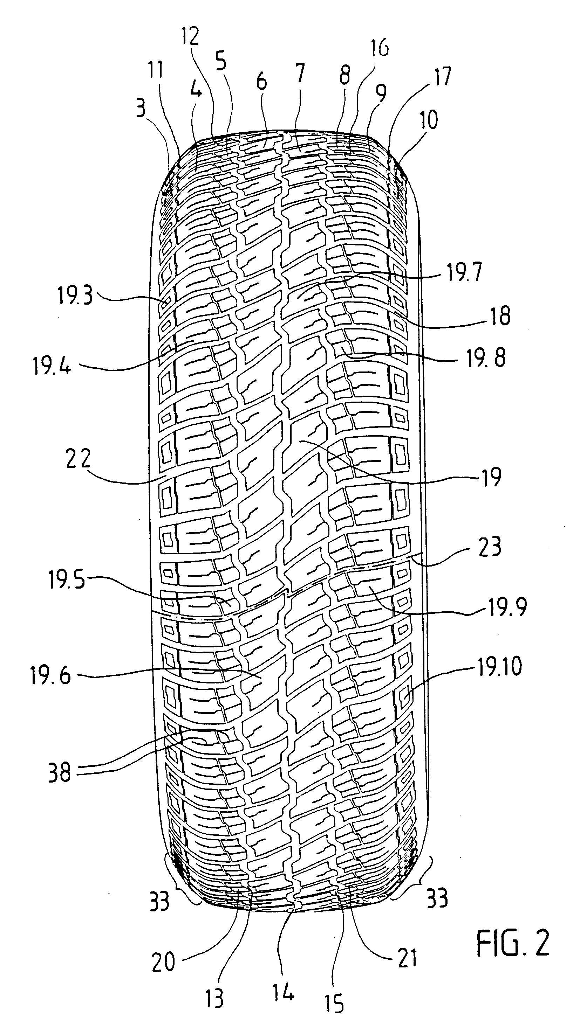

In den Figuren 1 und 2 sind die an der äußeren Peripherie des Reifens vorhandenen Körperkanten gezeigt; der Übersichtlichkeit halber sind die Konturen in der Tiefe des Profiles, also die Übergänge zwischen Rillengrund und Klotzflanken nicht dargestellt. Mit Rücksicht auf die Dauerhaltbarkeit sind diese Übergänge in an sich bekannter Weise verrundet.

Die Figur 2 zeigt den als Beispiel gewählten Reifen 1 in der Draufsicht. Das erfindungsgemäße Laufflächenprofil weist die Klotzreihen 3, 4, 5, 6, 7, 8, 9 und 10 auf. Die Klotzreihen 3 und 10 sind aufgrund ihrer ausschließlichen Erstreckung in den Reifenschultern 33 als Schulterreihen anzusprechen. Die Klotzreihen 4 und 9 werden als Außenreihen bezeichnet. Die Klotzreihen 5 und 8 werden als Zwischenreihen bezeichnet. Die Klotzreihen 6 und 7 werden als mittlere Klotzreihen bezeichnet, weil sie an die Mittellinie angrenzen.

Die Klötze der Klotzreihen werden allgemein mit 19 bezeichnet. Die Klötze der Schulterreihe werden speziell mit 19.3, die Klötze der Außenreihe 4 werden speziell mit 19.4 bezeichnet und so fort. Lediglich in den mittleren Klotzreihen 6 und 7 reicht diese Unterscheidung nicht aus, da sich hier der Klotzgrundriß immer erst im übernächsten Klotz der gleichen Reihe wiederholt. Entsprechend obigem Schema werden die T-Klötze der mittleren Reihe 6 als 19.6 und die T-Klötze der mittleren Reihe 7 als 19.7 bezeichnet, während die S-Klötze allgemein mit 28 bezeichnet werden, die S-Klötze der mittleren Reihe 6 mit 28.6 und die der mittleren Reihe 7 mit 28.7. Zwischen der Schulterreihe 3 und der äußeren Klotzreihe 4 verläuft die Umfangsrille 11. Sie ist in jedem Profilschritt - etwa auf mittlerer Umfangserstreckung der durch diese Nut voneinander getrennten, fluchtend ausgerichteten Profilklötze 19.3 und 19.4 - geringfügig gekröpft. In analoger Weise zur linken Reifenhälfte 20 ist auf der rechten Reifenhälfte 21 die Umfangsrille 17 zwischen der Schulterklotzreihe 10 und der äußeren Klotzreihe 9 gestaltet.

Zwischen den Klötzen 19.4 der Außenreihe und den Klötzen 19.5 der Zwischenreihe 5 sind Rillen 12 angeordnet, deren besonderes Kennzeichen die Beschränkung auf die halbe Nuttiefe ist; nach Abnutzung der halben Profiltiefe erscheinen also nebeneinanderliegende Klötze 19.4 und 19.5 als ein einziger, entsprechend breiterer Klotz. Die Feineinschnitte 38 nebeneinander liegender Klötze 19.4 und 19.5 sind so aufeinander abgestimmt, daß sie nach Abnutzung der halben Profiltiefe ineinander übergehen. Wenn alle Rillen 12 zwischen benachbarten Klötzen 19.4 und 19.5 den Reifenumfang zusammenfassend betrachtet werden, erscheint die Umfangsrille 12; die Umfangsrille 12 weist die Besonderheit auf, daß ihr Nutgrund zwischen zwei Niveaus alterniert. Wo Querrillen 18 geschnitten werden, hat sie nämlich die volle Tiefe.

Ähnlich der Rille 11 ist die Umfangsrille 12 in jedem Profilschritt - etwa auf mittlerer Umfangserstreckung der durch diese Nut 12 voneinander getrennten, fluchtend ausgerichteten Profilklötze 19.4 und 19.5 - geringfügig gekröpft. Weiterhin sind die einzelnen, sich über eine Profilschrittlänge erstreckenden Nutabschnitte 12 gegenüber der Umfangsrichtung etwas geneigt und zwar in der umgekehrten Orientierung wie die Querrillen 18 zwischen den Klötzen der Reihe 6 oder der Reihe 7. Der von den nicht achsensymmetrisch, sondern gleichsteigend ausgebildeten Querrillen 18 zwischen den mittleren Klotzreihen 6 und 7 ausgehende Schräglaufeffekt wird teilweise durch die entgegengesetzte Orientierung der Nutabschnitte 12 gegenüber der Umfangsrille kompensiert. Zur Kompensation tragen weiterhin in analoger Weise die Abschnitte der Umfangsrille 13 bei. Von den Abschnitten der Nut 12 unterscheiden sich die Abschnitte der Nut 13 im wesentlichen durch ihre volle Tiefe und etwa doppelte Breite und sind ansonsten ähnlich ausgebildet.

Die Umfangsrille 16 zwischen der Außenreihe 9 und der Zwischenreihe 8 ist analog ausgebildet; die Umfangsrille 15 zwischen der Zwischenreihe 8 und der mittleren Reihe 7 ist analog der Umfangsrille 13 ausgebildet.

Unter Verzicht auf Achsensymmetrie sind alle Querrillen 18 gleichsteigend. In jeder der Reifenhälften 20 und 21 fluchten die Querrillenabschnitte zu monoton gekrümmten durchgehenden Querrillen 18. Der Krümmungssinn ist zwischen rechter (21) und linker (20) Reifenhälfte verschieden. Die Querrillen 18 der linken Reifenhälfte 20 verlaufen punktsymmetrisch zu den Querrillen 18 der rechten Reifenhälfte 21. Entlang der mittleren Umfangsrille 14 fluchten die Querrillen 18 nicht zueinander; sie sind um knapp 20 % der Profilschrittlänge in Umfangsrichtung gegeneinander versetzt. Dieser Versatz hat sich als wesentlich für die Pegelsenkung des Obertonspektrums erwiesen und ist eine Weiterbildung der Erfindung nach Anspruch 1. Für eine der Querrillen 18 ist die Rillenmittellinie 23 eingezeichnet, auf die die Neigungsangaben im Oberbegriff des Anspruches 1 bezogen sind. Die Neigung zur Axialen beträgt am Laufflächenrand 22 ca 5°, im Zenit ca. 35°.

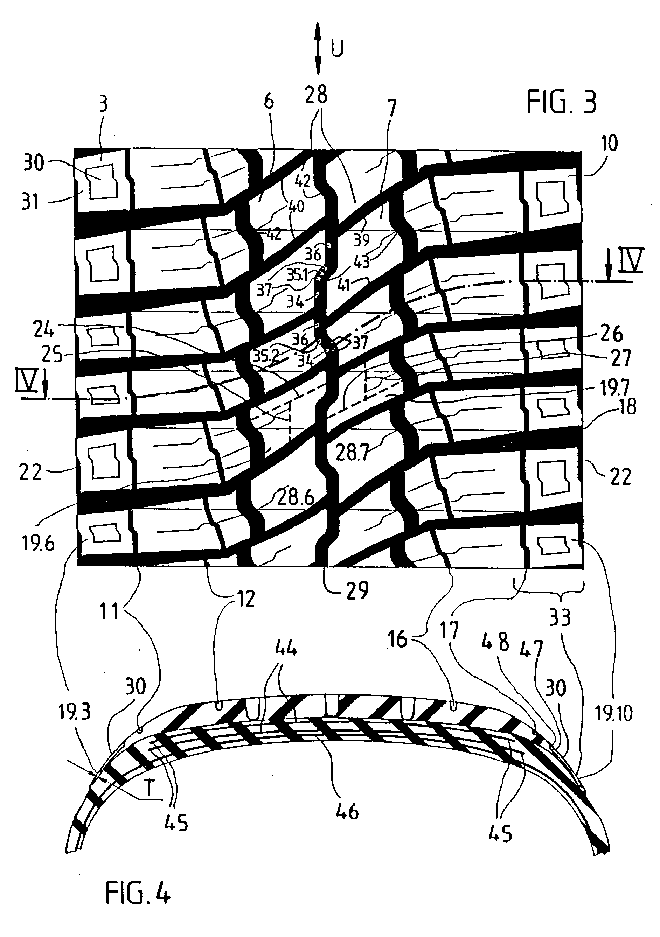

In Figur 3 sind die erhabenen Teile des Laufflächenprofiles eines erfindungsgemäßen Reifens 1 weiß gezeichnet, die versenkten schwarz. Die mittleren Klotzreihen 6 und 7 weisen erfindungsgemäß S- und T-Klötze in abwechselnder Folge auf. Der Aufbau der T-Klötze 19.6 und 19.7 ist in dieser Figur näher erläutert. Um die Bezeichnung plausibel zu machen, ist in je einem T-Klotz der mittleren Reihen 6 und 7 in gestrichelter Linie ein gedachtes "T" eingezeichnet. In der Reihe 6 steht das T aufrecht, in Reihe 7 auf dem Kopf. Entsprechend den Querstrichen 24 beziehungsweise 26 der Ts sind die dazugehörigen Klotzbereiche als Querbalken bezeichnet und mit den gleichen Bezugszeichen versehen. Mit den senkrechten Strichen 25 und 27 korrespondieren in analoger Weise die - schon zu Anfang definierten - Stützbalken.

Die beiden Stirnkanten 40 eines jeden S-Klotzes 28 stimmen in ihrer Länge praktisch überein aufgrund der Parallelität der gekröpften, S-artig geschwungenen Längskanten 42. Entsprechendes gilt nicht für die T-Klötze 19.6 und 19.7 aufgrund der Spiegelverkehrtheit der gekröpften S-artig geschwungenen Längskanten 43. Die T-Klötze weisen eine kurze Stirnseite 39 und eine lange Stirnseite 41 auf. Von großer Bedeutung ist, daß für jeden Quernutabschnitt 18 zwischen Klötzen (19.6, 19.7, 28.6, 28,7) der mittleren Klotzreihen 6 und 7 gilt, daß die beiden sie begrenzenden Klotzkanten verschieden lang sind. In abwechselnder Folge sind nämlich die Quernuten 18 im Bereich der mittleren Klotzreihen 6, 7 durch die Kantenpaare 39/40 und 40/41 gebildet, wobei gemäß Anspruch 8 mit dem Symbol "l" für Länge und dem Bezugszeichen der jeweiligen Kante als Index gilt:
l₃₉< l₄₀< l₄₁.
Jede Nut umfaßt die beiden Schallereignisse Klotzkantenein- und -auslauf. Bei niedriger Fahrgeschwindigkeit werden beide Phänomene noch als Einzelereignisse vom Ohr aufgelöst. Bei Verschiedenartigkeit der Einzelereignisse wird das Geräusch bei Subjektiv-Bewertungen als weniger störend empfunden.

An den Rändern 22 der Lauffläche 2 erweitern sich die Querrillen 18 trompetenartig. Dies begünstigt die Aquaplaning- und Geräuscheigenschaften.

Die Klötze der Schulterklotzreihe 3 und 10 weisen Senken 30 auf, die von erhabenem Rand 31 umgeben sind. Gegenüber der bekannten vollen Schulterklötzen wird hierdurch die Menge walkenden Gummis an einer besonders stark auf Verformung beanspruchten Zone verringert bei gleichzeitiger Erhöhung der kühlenden Oberfläche. Es ergibt sich eine Temperaturabsenkung an den besonders empfindlichen Enden 45 der Gürtellagen 44. Sie lösen sich dadurch noch schwerer voneinander und von der - hier einlagig ausgeführten -Radialkarkasse 46. Von besonderer Bedeutung sind die Entkoppelungsnuten 11 und 17 zwischen den Profilelementen 19.3, 19.10 und den Klötzen 19.4, 19.9 der äußeren Klotzreihen 4, 9.

Die Figur 4 zeigt einen Querschnitt durch die Krone eines erfindungsgemäßen Reifens 1 mit der beschriebenen Lauffläche 2. Hier ist insbesondere die verringerte Tiefe der Nuten 12 und 16 sowie die Tiefe T der Senken 30 der Schulterklötze 19.3 und 19.10 zu erkennen. Der Grund der Senke 30 verläuft in diesem Ausführungsbeispiel parallel zur Reifenperipherie in einer Tiefe von 1,4 mm. Die Tiefe der Entkoppelungsnuten 11 und 17 beträgt in diesem Ausführungsbeispiel 1,8 mm. Die Tiefe der Entkoppelungsrillen 11 und 17 liegt also in der gleichen Größenordnung wie die Senkentiefe T; vorzugsweise beträgt die Tiefe der Entkoppelungsnut 100 % bis 150 % der Senkentiefe T.

Durch Temperaturabsenkung an den Kanten 45 der Gürtellagen 44 der Radialkarkasse 46 wird die Dauerhaltbarkeit des Gürtelverbandes erhöht beziehungsweise eine höhere Maximalgeschwindigkeit ermöglicht. Gegenüber den vorbekannten Gestaltungen zur Reduktion der walkenden Gummimasse in der Reifenschulter zeichnet sich die Lösung gemäß Anspruch 13 durch geringere Geräuschanregung, geringere Körperschallleitung und bessere Kantensteigfähigkeit aus. Dies wird durch die Trennung der Schulterprofilklötze untereinander und gegenüber den Klötzen der äußeren, benachbarten Klotzreihen erreicht. Weiterbildungsgemäße Reifen erlauben überdies eine besonders einfache und wirkungsvolle Sicherheitsüberprüfung, da sie den Verschleiß der Reifenschultern anzeigen.

Als Ergänzung der Beschreibung ist eine Liste der verwendeten Bezugszeichen beigefügt.

Erfindungsgemäße Reifen zeichnen sich durch gute Allround-Eigenschaften aus. Insbesondere sind sie leicht montierbar, halten lange, bieten gutes Aquaplaningverhalten und sind leise.

## Patentansprüche

1. Fahrzeugreifen (1) mit Laufflächenprofil (2) mit mehreren sich in der Reifenumfangsrichtung (U) erstreckenden Profilklotzreihen (3 bis 10), die voneinander durch gewellte, im wesentlichen in Umfangsrichtung (U) verlaufende Längsrillen (11 bis 17) getrennt sind, wobei innerhalb jeder Profil-Klotzreihe (3 bis 10) die einzelnen Klötze (19.3 bis 19.10) durch Querrillen (18) voneinander getrennt sind und die Querrillen (18) der einzelnen Klotzreihen (3 - 10) in der Phasenlage so aufeinander abgestimmt angeordnet sind, daß sowohl in der linken (20) als auch in der rechten (21) Laufflächenhälfte die Querrillen (18) zueinander fluchten, wobei die Rillenmittellinien (23) der Querrillen (18) an den Rändern (22) der Lauffläche (2) eine Neigung gegenüber der Axialen zwischen 3° und 15° und die Rillenmittellinien (23) der Querrillen (18) in den mittleren Klotzreihen (6, 7) eine Neigung gegenüber der Axialen zwischen 15° und 50° aufweisen, so daß die Querrillen (18) zusammen ein Muster querliegender, gestreckter "S" ergeben,
**dadurch gekennzeichnet,**
daß die mittleren Klotzreihen (6, 7) je aus einer Folge abwechselnder S- und T-Klötze bestehen, wobei unter S-Klötzen solche Klötze verstanden werden, die zwei gegenüberliegende, S-förmig geschwungene Seitenkanten (42) aufweisen, die im wesentlichen zueinander parallel verlaufen und wobei unter T-Klötzen solche Klötze verstanden werden, die ebenfalls S-förmig geschwungene Seitenkanten (43) aufweisen, die jedoch nicht zueinander parallel verlaufen, sondern im wesentlichen spiegelverkehrt.

2. Fahrzeugreifen (1) nach Anspruch 1, dadurch gekennzeichnet, daß der geneigte Querbalken (24) eines jeden T-Klotzes (19.6) einer (6) der mittleren Klotzreihen (6, 7) in der Laufrichtung gesehen vor dem in Umfangsrichtung (U) ausgerichteten Stützbalken (25) des selben T-Klotzes (19.6) liegt, während der geneigte Querbalken (26) eines jeden T-Klotzes (19.7) einer anderen (7) der mittleren Klotzreihen (6, 7) in der Laufrichtung gesehen hinter dem in Umfangsrichtung (U) ausgerichteten Stützbalken (27) desselben T-Klotzes (19.7) liegt, wobei unter "Querbalken (24 oder 26)" eines T-Klotzes (19.6, 19.7) der im normalen Schriftbild für ein "T" waagerecht verlaufende Strich zu verstehen ist, während unter "Stützbalken (25 oder 27)" der im normalen Schriftbild für ein "T" senkrecht verlaufende Strich zu verstehen ist.

3. Fahrzeugreifen (1) nach Anspruch 2, dadurch gekennzeichnet, daß die entgegengesetzt ausgerichteten T-Klötze (19.6, 19.7) der mittleren Klotzreihen (6, 7) im wesentlichen axial nebeneinander liegen und Blockpaare dergestalt bilden, daß die paarbildenden T-Klötze durch eine in drei aneinander anschließende Bereiche (34, 35.1, 36) gegliederte Nut getrennt sind, deren äußere Bereiche (34, 36) in Umfangsrichtung (U) verlaufen und deren mittlerer Bereich (35.1) gegenüber den äußeren (34, 36) um 30° bis 70° gekröpft ist, wobei die beiden Ecken (37) zwischen den drei Bereichen (34, 35.1, 36) verrundet sind.

4. Fahrzeugreifen (1) nach Anspruch 1, vorzugsweise nach Anspruch 3, dadurch gekennzeichnet, daß die S-Klötze (28.6, 28.7) der mittleren Klotzreihen (6, 7) im wesentlichen axial nebeneinander liegen und Blockpaare dergestalt bilden, daß die paarbildenden S-Klötze durch eine in drei aneinander anschließende Bereiche gegliederte Nut getrennt sind, deren äußere Bereiche (34, 36) in Umfangsrichtung (U) verlaufen und deren mittlerer Bereich (35.2) gegenüber den äußeren (34, 36) um 30° bis 70° gekröpft ist, wobei die beiden Ecken (37) zwischen den drei Bereichen (34, 35.2, 36) verrundet sind.

5. Fahrzeugreifen (1) nach Anspruch 3 und Anspruch 4, dadurch gekennzeichnet, daß die Nuten zwischen den T-Klötzen (19.6, 19.7) in ihrem mittleren Bereich (35.1) zur anderen Seite hin abkröpfen als die Nuten zwischen den S-Klötzen (28.6, 28.7) in deren mittlerem Bereich (35.2).

6. Fahrzeugreifen (1) nach allen vorangehenden Ansprüchen, dadurch gekennzeichnet, daß sich zwischen den beiden mittleren Profilklotzreihen (6, 7) eine gewellte Längsrille (29) befindet, deren Wellenlänge über zwei Profilschritte des Laufflächenprofiles reicht, wobei die Amplitude der Längsrillenwelle (29) 50 % bis 110 % der Breite der Längsrille beträgt.

7. Fahrzeugreifen (1) nach Anspruch 1 dadurch gekennzeichnet, daß die T-Klötze (19.6, 19.7) von geschwungenen, im wesentlichen in Umfangsrichtung verlaufenden und spiegelverkehrt gegenüberliegenden Seitenkanten (43) und von im wesentlichen geraden, parallel zueinander mit einer Neigung zwischen 15° und 50° gegenüber der Axialen verlaufenden Stirnkanten (39, 41) begrenzt sind, wobei eine der beiden Stirnkanten (41) um 25 % bis 45 % der kürzeren der beiden Stirnkantenlängen länger ist als die kürzere (39).

8. Fahrzeugreifen (1) nach Anspruch 7 dadurch gekennzeichnet, daß die Länge der kürzeren Stirnkanten (39) der T-Klötze (19.6, 19.7) kleiner ist als die Länge der Stirnkanten (40) der S-Klötze (28.6, 28.7) und, daß die Länge der Stirnkanten (40) der S-Klötze (28.6, 28.7) kleiner ist als die Länge der längeren Stirnkanten (41) der T-Klötze (19.6, 19.7).

9. Fahrzeugreifen (1) nach Anspruch 1, dadurch gekennzeichnet, daß es sechs Profilklotzreihen (4, 5, 6, 7, 8, 9) umfaßt, die bei normaler Geradeausfahrt die Aufstandsfläche durchlaufen und an beiden axialen Rändern (22) je eine weitere Schulterklotzreihe (3, 10) aufweist, die bei normaler Geradeausfahrt die Straßenoberfläche nicht berühren.

10. Fahrzeugreifen (1) nach Anspruch 1 mit auf beiden Seiten je einer äußeren Profilklotzreihe (4, 9), die sich nicht oder zumindest nicht wesentlich bis in die Reifenschulter (33) erstreckt und nach axial innen anschließend mit je einer weiteren Profilklotzreihe (5, 8) dadurch gekennzeichnet, daß die Klötze (19.4, 19.5; 19.8, 19.9) dieser benachbarten Klotzreihen (4, 5; 8, 9) durch Nuten (12, 16) voneinander getrennt sind, die 30 % bis 55 % der Tiefe der übrigen Nuten (18) aufweisen.

11. Fahrzeugreifen (1) nach Anspruch 1, dadurch gekennzeichnet, daß sich die Querrillen (18) an den Rändern (22) des Laufflächenprofiles (2) nach axial außen hin trompetenartig erweitern.

12. Fahrzeugreifen (1) nach Anspruch 1, dadurch gekennzeichnet, daß er in an sich bekannter Weise als Luftreifen ausgebildet ist und eine Radialkarkasse (46) und Gürtellagen (44) aufweist und auf zumindest einer der Reifenschultern (33) weitere Profilelemente (19.3, 19.10), die beim Abrollen des Reifens (1) unter Normalbedingungen (ebene Geradeausfahrt bei normalem Betriebsdruck) mit der Fahrbahn nicht in Kontakt kommen, aufweist, bei denen der Negativanteil mindestens 40 % beträgt.

13. Fahrzeugreifen (1) nach Anspruch 12, dadurch gekennzeichnet, daß jedes Profilelement (19.3, 19.10) eine von erhabenem Rand (31) umschlossene Senke (30) aufweist und daß die Profilelemente (19.3, 19.10) von den Klötzen (19.4, 19.9) der äußeren Klotzreihen (4, 9) durch Umfangsnuten (11, 17) entkoppelt sind, die (11, 17) im wesentlichen so tief sind, wie die Tiefe (T) der Senke (30) gegenüber den erhabenen Rändern (31).

14. Fahrzeugreifen (1) nach Anspruch 13 dadurch gekennzeichnet, daß die Tiefe (T) der Senke (30) gegenüber dem erhabenen Rand (31) etwa 0,7 bis 2 mm beträgt.

15. Fahrzeugreifen (1) nach Anspruch 13, dadurch gekennzeichnet, daß der erhabene Rand (31) jedes Profilelementes (19.3, 19.10) ein in sich geschlossener - vorzugsweiser unrunder - Ring ist, der von allen anderen erhabenen Teilen der Reifenoberfläche durch Negative wie Längs- oder Querrillen getrennt ist.

16. Fahrzeugreifen (1) nach Anspruch 13, dadurch gekennzeichnet, daß die Tiefenlinien der Senke (30) im wesentlichen parallel zu den inneren Begrenzungskanten (48) des erhabenen Randes (31) verlaufen.

17. Fahrzeugreifen (1) nach Anspruch 13, dadurch gekennzeichnet, daß jede Senke (30) im wesentlichen eben ist und, daß die Begrenzungskanten (47) jeder Senke (30) in der Draufsicht parallel verlaufen zu den inneren Begrenzungskanten (48) des zugehörigen erhabenen Randes (31).

18. Fahrzeugreifen (1) nach Anspruch 13, dadurch gekennzeichnet, daß die Profilelemente (19.3, 19.10) im wesentlichen von quadratischer Gestalt sind, wobei zwei Elementkanten annähernd quer (75° bis 87°) zur Umfangsrichtung (U) angeordnet sind, während die beiden anderen im wesentlichen in die Umfangsrichtung (U) weisen und etwa auf ihrer halben Länge eine Kröpfung zeigen, die einen Kantenversatz von 25 % bis 65 % der Breite der erhabenen Ränder (31) beträgt.

19. Fahrzeugreifen (1) nach Anspruch 1, dadurch gekennzeichnet, daß die Querrillen (18) entlang der mittleren Umfangsrille (14) um 15 % bis 20 % der Profilschrittlänge in Umfangsrichtung gegeneinander versetzt sind.

## Claims

1. Vehicle tyre (1), having a tread surface profile (2) with a plurality of rows of profile blocks (3 to 10), which extend in the circumferential direction (U) of the tyre and are separated from one another by corrugated longitudinal grooves (11 to 17), which extend substantially in the circumferential direction (U), the individual blocks (19.3 to 19.10) being separated from one another by transverse grooves (18) within each row of profile blocks (3 to 10), and the transverse grooves (18) of the individual rows of blocks (3 - 10) being disposed so as to be adapted to one another in the phase position such that the transverse grooves (18) are in alignment with one another both in the left-hand tread surface half (20) and in the right-hand tread surface half (21), the central axes (23) of the transverse grooves (18) at the edges (22) of the tread surface (2) having an inclination relative to the axial line of between 3° and 15°, and the central axes (23) of the transverse grooves (18) in the central rows of blocks (6, 7) having an inclination relative to the axial line of between 15° and 50°, so that the transverse grooves (18) together produce a design of a transversely lying, elongated "S", characterised in that the central rows of blocks (6, 7) each comprise a sequence of alternating S- and T-shaped blocks, the S-shaped blocks being understood to be those blocks having two oppositely situated lateral edges (42), which are curved in an S-shaped manner and extend substantially parallel to one another, and the T-shaped blocks being understood to be those blocks having lateral edges (43), which are also curved in an S-shaped manner but which do not extend parallel to one another but are substantially mirror-inverted.

2. Vehicle tyre (1) according to claim 1, characterised in that, when viewed with respect to the direction of travel, the inclined crossbar (24) of each T-shaped block (19.6) of a row (6) of the central rows of blocks (6, 7) is situated in front of the upright support (25) of the same T-shaped block (19.6), which upright support is orientated in the circumferential direction (U), whereas, when viewed with respect to the direction of travel, the inclined crossbar (26) of each T-shaped block (19.7) of another row (7) of the central rows of blocks (6, 7) is situated behind the upright support (27) of the same T-shaped block (19.7), which upright support is orientated in the circumferential direction (U), the "crossbar (24 or 26)" of a T-shaped block (19.6, 19.7) being understood to be the line extending horizontally in the normal style for writing a "T", whereas "upright support (25 or 27)" is to be understood to be the line extending vertically in the normal style for writing a "T".

3. Vehicle tyre (1) according to claim 2, characterised in that the oppositely orientated T-shaped blocks (19.6, 19.7) of the central rows of blocks (6, 7) lie substantially axially adjacent one another and form pairs of blocks such that the pair-forming T-shaped blocks are separated by a groove, which is divided into three regions (34, 35.1, 36) communicating with one another, the external regions (34, 36) of said groove extending in the circumferential direction (U) and the central region (35.1) of said groove being offset by 30° to 70° relative to the external regions (34, 36), the two corners (37) between the three regions (34, 35.1, 36) being rounded.

4. Vehicle tyre (1) according to claim 1, preferably according to claim 3, characterised in that the S-shaped blocks (28.6, 28.7) of the central rows of blocks (6, 7) lie substantially axially adjacent one another and form pairs of blocks such that the pair-forming S-shaped blocks are separated by a groove, which is divided into three regions communicating with one another, the external regions (34, 36) of said groove extending in the circumferential direction (U), and the central region (35.2) of said groove being offset by 30° to 70° relative to the external regions (34, 36), the two corners (37) between the three regions (34, 35.2, 36) being rounded.

5. Vehicle tyre (1) according to claim 3 and claim 4, characterised in that the grooves between the T-shaped blocks (19.6, 19.7) are bent in their central region (35.1) towards the other side when compared with the side towards which the grooves between the S-shaped blocks (28.6, 28.7) are bent in their central region (35.2).

6. Vehicle tyre (1) according to all of the preceding claims, characterised in that an undulatory longitudinal groove (29) is situated between the two central rows of profile blocks (6, 7), the length of undulation of said groove extending over two profile steps of the tread surface profile, the amplitude of the undulation of the longitudinal groove (29) being between 50 % and 110 % of the width of the longitudinal groove.

7. Vehicle tyre (1) according to claim 1, characterised in that the T-shaped blocks (19.6, 19.7) are defined by curved lateral edges (43), which extend substantially in the circumferential direction and lie opposite one another in a mirror-inverted manner, and by substantially rectilinear end edges (39, 41), which extend parallel to one another with an inclination of between 15° and 50° relative to the axial line, one of the two end edges (41) being longer than the shorter end edge (39) by between 25 % and 45 % of the shorter of the two end edge lengths.

8. Vehicle tyre (1) according to claim 7, characterised in that the length of the shorter end edges (39) of the T-shaped blocks (19.6, 19.7) is shorter than the length of the end edges (40) of the S-shaped blocks (28.6, 28.7), and in that the length of the end edges (40) of the S-shaped blocks (28.6, 28.7) is shorter than the length of the longer end edges (41) of the T-shaped blocks (19.6, 19.7).

9. Vehicle tyre (1) according to claim 1, characterised in that it includes six rows of profile blocks (4, 5, 6, 7, 8, 9), which traverse the supporting surface during normal travel in a straight line, and it is provided, on each of its two axial edges (22), with an additional row of shoulder blocks (3, 10), which are not in contact with the road surface during normal travel in a straight line.

10. Vehicle tyre (1) according to claim 1, having an external row of profile blocks (4, 9) on each of its two sides, said row not extending into the tyre shoulder, or at least not substantially extending thereinto, and having an additional row of profile blocks (5, 8) communicating axially inwardly therewith, characterised in that the blocks (19.4, 19.5; 19.8, 19.9) of these adjacent rows of blocks (4, 5; 8, 9) are separated from one another by grooves (12, 16), which have a depth corresponding to between 30 % and 55 % of the depth of the other grooves (18).

11. Vehicle tyre (1) according to claim 1, characterised in that the transverse grooves (18) at the edges (22) of the tread surface profile (2) widen axially outwardly in a trumpet-like manner.

12. Vehicle tyre (1) according to claim 1, characterised in that it is formed as a pneumatic tyre in a manner known per se and comprises a radial carcase (46) and belt plies (44), and it is provided, on at least one of the tyre shoulders (33), with additional profile elements (19.3, 19.10) which do not come into contact with the roadway when the tyre (1) travels under normal conditions (travelling on a level surface in a straight line at normal operational pressure), the negative proportion being at least 40 %.

13. Vehicle tyre (1) according to claim 12, characterised in that each profile element (19.3, 19.10) has a depression (30), which is surrounded by a raised edge (31), and in that the profile elements (19.3, 19.10) are isolated from the blocks (19.4, 19.9) of the external rows of blocks (4, 9) by circumferential grooves (11, 17), which grooves (11, 17) are substantially as deep as the depth (T) of the depression (30) relative to the raised edges (31).

14. Vehicle tyre (1) according to claim 13, characterised in that the depth (T) of the depression (30) relative to the raised edge (31) is substantially between 0.7 and 2 mm.

15. Vehicle tyre (1) according to claim 13, characterised in that the raised edge (31) of each profile element (19.3, 19.10) is a ring - preferably not circular - which is closed upon itself and separated from all of the other raised parts of the tyre surface by negatives such as longitudinal or transverse grooves.

16. Vehicle tyre (1) according to claim 13, characterised in that the depth lines of the depression (30) extend substantially parallel to the internal boundary edges (48) of the raised edge (31).

17. Vehicle tyre (1) according to claim 13, characterised in that each depression (30) is substantially level, and in that, when viewed from above, the boundary edges (47) of each depression (30) extend parallel to the internal boundary edges (48) of the associated raised edge (31).

18. Vehicle tyre (1) according to claim 13, characterised in that the profile elements (19.3, 19.10) have a substantially square configuration, two element edges being disposed approximately transversely (75° to 87°) relative to the circumferential direction (U), whereas the other two element edges extend substantially in the circumferential direction (U) and have a curvature over substantially half their length, which curvature amounts to an offset arrangement of the edges of between 25 % and 65 % of the width of the raised edges (31).

19. Vehicle tyre (1) according to claim 1, characterised in that the transverse grooves (18) along the central circumferential groove (14) are offset from one another in the circumferential direction by between 15 % and 20 % of the profile step length.

## Revendications

1. Pneumatique de véhicule (1) comportant un profil de bande de roulement (2) pourvu de plusieurs rangées de blocs de profil (3 à 10) s'étendant dans la direction circonférentielle (U) du pneumatique et qui sont séparées mutuellement par des rainures longitudinales (11 à 17) ondulées et orientées dans l'essentiel dans la direction circonférentielle (U), les différents blocs (19.3 à 19.10) situés dans chaque rangée de blocs du profil ( 3 à 10) étant séparés l'un de l'autre par des rainures transversales (18) et les rainures transversales (18) des différentes rangées de blocs (3 - 10) sont disposées dans la relation de phases en correspondance mutuelle de telle sorte qu'aussi bien dans la moitié de gauche (20) que dans la moitié de droite (21) de la bande de roulement, les rainures transversales (18) soient mutuellement en coïncidence, les lignes centrales (23) des rainures transversales (18) ayant sur les bords (22) de la bande de roulement (2) un angle d'inclinaison compris entre 3° et 15° par rapport à la direction axiale tandis que les lignes centrales (23) des rainures transversales (18) ont dans les rangées centrales de blocs (6, 7) un angle d'inclinaison compris entre 15° et 50° par rapport à la direction axiale, de telle sorte que les rainures transversales (18) forment au total un motif comportant des "S" allongés et disposés transversalement, caractérisé en ce que les rangées centrales de blocs (6, 7) se composent chacune d'une succession de blocs en S et en T en alternance, l'expression "blocs en S" désignant des blocs qui comportent deux chants latéraux (42), mutuellement opposés, ondulés en forme de S et orientés dans l'essentiel parallèlement entre eux tandis que l'expression "blocs en T" désigne des blocs, qui comportent des chants latéraux (43) également ondulés en forme de S, qui ne sont cependant pas orientés parallèlement entre eux mais qui sont dans l'essentiel inversés symétriquement.

2. Pneumatique de véhicule (1) selon la revendication 1, caractérisé en ce que la barre transversale inclinée (24) de chaque bloc en T (19.6) d'une (6) des rangées moyennes de blocs (6, 7) est située, en considérant le type de marche, en avant de la barre d'appui (25), orientée dans la direction circonférentielle (U), du même bloc en T (19.6), tandis que la barre transversale inclinée (26) de chaque bloc en T (19.7) d'une autre (7) des rangées centrales de blocs (6, 7) est située, en considérant le sens de marche, en arrière de la barre d'appui (27), orientée dans la direction circonférentielle (U), du même bloc en T (19.7), l'expression "barre transversale (24 ou 26)" d'un bloc en T (19.6, 19.7) correspondant au trait orienté horizontalement dans un "T" représenté en écriture normale tandis que l'expression "barre d'appui (25 ou 27)" correspond au trait orienté verticalement dans un "T" représenté en écriture normale.

3. Pneumatique de véhicule (1) selon la revendication 2, caractérisé en ce que les blocs en T (19.6, 19.7), orientés dans des sens opposés, des rangées centrales de blocs (6, 7) sont situés sensiblement axialement l'un à côté de l'autre et forment des paires de blocs agencés de telle sorte que les blocs en T formant une paire soient séparés par une rainure décomposée en trois zones reliées l'une avec l'autre (34, 35.1, 36), parmi lesquelles les zones extérieures (34, 36) sont orientées dans la direction circonférentielle (U) tandis que la zone centrale (35.1) est incurvée par rapport aux zones extérieures (34, 36) d'un angle compris entre 30° et 70°, les deux coins (37) entre les trois zones (34, 35.1, 36) étant arrondis.

4. Pneumatique de véhicule (1) selon la revendication 1, avantageusement selon la revendication 3, caractérisé en ce que les blocs en S (28.6, 28.7) des rangées centrales de blocs (6, 7) sont situés sensiblement axialement l'un à côté de l'autre et forment des paires de blocs agencés de telle sorte que les blocs en S formant une paire soient séparés par une rainure décomposée en trois zones reliées l'une avec l'autre et parmi lesquelles les zones extérieures (34, 36) sont orientées dans la direction circonférentielle (U) tandis que la zone centrale (35.2) est incurvée par rapport aux zones extérieures (34, 36) d'un angle compris entre 30° et 70°, les deux coins (37) entre les trois zones (34, 35.2, 36) étant arrondis.

5. Pneumatique de véhicule (1) selon la revendication 3 et la revendication 4, caractérisé en ce que les rainures situées entre les blocs T (19.6, 19.7) comportent une zone centrale (35.1) incurvée de l'autre côté par rapport à la zone centrale (35.2) des rainures situées entre les blocs en S (28.6, 28.7).

6. Pneumatique de véhicule (1) selon toutes les revendications précédentes, caractérisé en ce qu'il est prévu entre les deux rangées centrales de blocs de profil (6, 7) une rainure longitudinale ondulée (29), dont la longueur d'ondulations s'étend sur deux échelons du profil de bande de roulement, l'amplitude des ondulations (29) de la rainure longitudinale étant comprise entre 50 % et 110 % de la largeur de la rainure longitudinale.

7. Pneumatique de véhicule (1) selon la revendication 1, caractérisé en ce que les blocs en T (19.6, 19.7) sont délimités par des chants latéraux (43) ondulés, orientés sensiblement dans une direction circonférentielle et mutuellement opposés en étant inversés symétriquement ainsi que par des chants frontaux (39, 41) sensiblement droits, orientés parallèlement entre eux et inclinés d'un angle compris entre 15° et 50° par rapport à la direction axiale, un des deux chants frontaux (41) étant plus long que le plus court (39) d'une distance comprise entre 25 % et 45 % de la plus courte des deux longueurs de chants frontaux.

8. Pneumatique de véhicule (1) selon la revendication 7, caractérisé en ce que la longueur des chants frontaux (39) les plus courts des blocs en T (19.6, 19.7) est plus petite que la longueur des chants frontaux (40) des blocs en S (28.6, 28.7) et en ce que la longueur des chants frontaux (40) des blocs en S (28.6, 28.7) est plus petite que la longueur des chants frontaux (41) les plus longs des blocs en T (19.6, 19.7).

9. Pneumatique de véhicule (1) selon la revendication 1, caractérisé en ce qu'il comporte six rangées de blocs de profil (4, 5, 6, 7, 8, 9) qui, en cas de marche normale en ligne droite, se déplacent sur la surface d'appui et le pneumatique est pourvu, sur les deux bords axiaux (22) respectivement d'une autre rangée de blocs d'épaulements (3, 10) qui, en cas de marche normale en ligne droite, ne sont pas en contact avec la surface de la route.

10. Pneumatique de véhicule (1) selon la revendication 1, comportant sur chacun des deux côtés une rangée extérieure de blocs de profil (4, 9), qui ne s'étend pas, ou tout au moins pas dans l'essentiel, jusque dans l'épaulement de pneumatique (33), et qui comporte, à la suite axialement vers l'intérieur, respectivement une autre rangée de blocs de profil (5, 8), pneumatique caractérisé en ce que les blocs (19.4, 19.5 ; 19.8, 19.9) de ces rangées de blocs adjacentes (4, 5 ; 8, 9) sont séparés l'un de l'autre par des rainures (12, 16) qui ont une profondeur comprise entre 30 % et 50 % de la profondeur des autres rainures (18).

11. Pneumatique de véhicule (1) selon la revendication 1, caractérisé en ce que les rainures transversales (18) situées sur les bords (22) du profil de bande de roulement (2) s'élargissent axialement vers l'extérieur en forme de trompettes.

12. Pneumatique de véhicule (1) selon la revendication 1, caractérisé en ce qu'il est agencé d'une manière connue sous forme d'un pneumatique gonflable et comporte une carcasse radiale (46) et des couches de ceinture (44) et en ce qu'il est pourvu, sur au moins un des épaulements (33), d'autres éléments de profil (19.3, 19.10) qui, lors du roulage du pneumatique (1) dans des conditions normales (marche en ligne droite sur route plane et avec pression normale de gonflage ) n'entrent pas en contact avec la route et dans lesquels la proportion de parties négatives s'élève à au moins 40 %.

13. Pneumatique de véhicule (1) selon la revendication 12, caractérisé en ce que chaque élément de profil (19.3, 19.10) comporte un creux (30) entouré par un bord en relief (31) et en ce que les éléments de profil (19.3, 19.10) des blocs (19.4, 19.9) des rangées extérieures de blocs (4, 9) sont mutuellement découplés par des rainures circonférentielles (11, 17), qui ont dans l'essentiel une profondeur correspondant à la profondeur (T) des creux (30) par rapport aux bords en relief (31).

14. Pneumatique de véhicule (1) selon la revendication 13, caractérisé en ce que la profondeur (T) du creux (30) par rapport au bord en relief (31) est comprise entre environ 0,7 et 2 mm.

15. Pneumatique de véhicule (1) selon ta revendication 13, caractérisé en ce que te bord en relief (31) de chaque élément de profit (19.3, 19.10) a une forme annulaire fermée - de préférence non circulaire - et il est séparé de toutes tes autres parties en relief de la surface du pneumatique par des parties négatives, comme des rainures longitudinales ou des rainures transversales.

16. Pneumatique de véhicule (1) selon la revendication 13, caractérisé en ce que les lignes de profondeur du creux (30) sont orientées dans l'essentiel parallèlement aux chants intérieurs de délimitation (48) du bord en relief (31).

17. Pneumatique de véhicule (1) selon la revendication 13, caractérisé en ce que chaque creux (30) est sensiblement plan et en ce que les chants de délimitation (47) de chaque creux (30) sont, en vue en plan, orientés parallèlement aux chants intérieurs de délimitation (48) du bord en relief (31) associé.

18. Pneumatique de véhicule (1) selon la revendication 13, caractérisé en ce que les éléments de profil (19.3, 19.10) ont sensiblement une forme carrée, deux chants d'élément étant disposés approximativement perpendiculairement (75° à 87°) à la direction circonférentielle (U) tandis que les deux autres sont orientés sensiblement dans la direction circonférentielle (U) et comportent, à peu près au milieu de leur longueur, une incurvation qui correspond à un décalage de chant de 25 % à 65 % de la largeur des bords en relief (31).

19. Pneumatique de véhicule (1) selon la revendication 1, caractérisé en ce que les rainures transversales (18) sont mutuellement décalées dans la direction circonférentielle de 15 % à 20 % de la longueur d'échelons de profil le long de la rainure circonférentielle centrale (14).
